# EUROPÄISCHE PATENTANMELDUNG

(11) **EP 3 885 123 A1**
(43) Veröffentlichungstag der Anmeldung: **29.09.2021**
(21) Anmeldenummer: 20164760.9
(22) Anmeldetag: 23.03.2020
(51) Int. Cl.: B32B 3/08, B32B 1/08, B32B 15/085, B65D 83/76, B65D 81/32, C08J 5/12, B29C 65/36, B29C 45/14

(54) **KARTUSCHE UND VERFAHREN ZUR HERSTELLUNG EINER KARTUSCHE**

(71) Anmelder: Hilti Aktiengesellschaft, 9494 Schaan (LI)
(72) Erfinder: Donner, Tobias, 81379 München (DE); Marder, Johannes, 89231 Neu-Ulm (DE); Ayrle, Thomas, 86853 Langerringen (DE); Willner, Ralf, 86874 Tussenhausen (DE)
(74) Vertreter: Hilti Aktiengesellschaft Corporate Intellectual Property

(57) **Zusammenfassung**

Die vorliegende Erfindung betrifft eine Kartusche (10) für eine Auspressvorrichtung, mit einem eigensteif ausgeführten Einsatz (16), an den in einem Anbindungsbereich (31, 33) zumindest bereichsweise eine erste wenigstens dreilagige Folie (14, 18) angebunden ist, wobei die erste Folie (14, 18) eine erste, mit einem Kunststoff ausgeführte Lage (35), eine zweite, einen metallischen Werkstoff aufweisende Lage (36) und eine dritte, mit einem Kunststoff ausgeführte Lage (37) aufweist, und wobei die zweite Lage (36) zwischen der ersten Lage (35) und der dritten Lage (37) angeordnet ist. Der eigensteif ausgeführte Einsatz (16) weist in dem Anbindungsbereich (31, 33) einen wenigstens zweilagigen Bereich (40, 41) auf, wobei eine erste, der ersten Folie (14, 18) zugewandte Lage (44) des Bereichs (40, 41) mit einem Kunststoff ausgeführt ist und der Bereich (40, 41) eine zweite Lage (45) aufweist, die auf einer der ersten Folie (14, 18) abgewandten Seite der ersten Lage (44) des Bereichs (40, 41) angeordnet ist. Die zweite Lage (45) weist einen metallischen Werkstoff auf. Es wird weiterhin ein Verfahren zur Herstellung einer derartigen Kartusche (10) beschrieben.

## Beschreibung

Die vorliegende Erfindung betrifft eine Kartusche für eine Auspressvorrichtung und ein Verfahren zur Herstellung einer Kartusche.

Kartuschen werden vor allem für die Lagerung von Material verwendet, wie Kleber, Dichtmasse, Mörtel, Farbe oder Schmierstoffe. Zudem lässt sich das Material über die Kartuschen auf ein Objekt leicht auftragen, sofern die Kartusche in eine entsprechende Auspressvorrichtung eingesetzt ist. Mittels der Auspressvorrichtung kann das Material exakt aufgetragen werden. Beispielsweise drückt eine Stange der Auspressvorrichtung gegen einen Boden der Kartusche, wodurch das Volumen der Kartusche komprimiert wird, sodass das in der Kartusche befindliche Material aus einer Öffnung gedrückt wird. Es kann ein Aufsatz auf der Kartusche angebracht sein, um das Material kontrolliert und exakt auf das Objekt auftragen zu können.

Aus der Praxis sind dabei Kartuschen bekannt, die einen eigensteifen, beispielsweise ringförmigen Einsatz aufweisen, der eine von einer insbesondere mehrlagigen Folie verschlossene Öffnung aufweist. Zudem kann es vorgesehen sein, dass die Kartusche eine mit einer Folie ausgeführte Seitenwand aufweist, die eine seitliche Begrenzung der Kartusche bildet. Zur Anbindung der jeweiligen Folie an den Einsatz ist es bekannt ein Hochfrequenz-Schweißverfahren einzusetzen.

Hierbei verwendete Folien weisen eine Aluminium-Schicht auf, die beim HochfrequenzSchweißen angeregt und erwärmt wird. Die in die Aluminium-Schicht eingebrachte Wärme breitet sich durch weitere Folienschichten der Folie aus und wird hierdurch auf den Einsatz übertragen.

Die Aluminium-Schicht bzw. Lage ist dabei insbesondere zwischen zwei Kunststoff-Schichten bzw. Lagen angeordnet, wobei die von der Aluminium-Schicht während des Hochfrequenz-Schweißens ausgehende Hitze durch die dem Einsatz zugewandte Kunststoff-Lage in den Einsatz übertragen wird. Es ist hierbei schwierig, die in das System eingebrachte Energie derart einzustellen, dass einerseits der Einsatz zur Erzielung einer gewünschten Anbindung der Folie ausreichend erhitzt und andererseits die Folie bei dem Anbindungsprozess nicht überhitzt wird. In beiden Fällen liegt eine Belastbarkeit der Verbindung der Folie mit dem Einsatz gegebenenfalls unterhalb einer maximalen Belastbarkeit der Folie.

Es ist die Aufgabe der Erfindung eine Kartusche zur Verfügung zu stellen, bei der eine Folie prozesssicher an einen eigensteifen Einsatz anbindbar ist und eine stabile Anbindung erzielt ist. Weiterhin ist es Aufgabe der Erfindung ein Verfahren zur Herstellung einer derartigen Kartusche zur Verfügung zu stellen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Es wird eine Kartusche für eine Auspressvorrichtung mit einem eigensteif ausgeführten Einsatz vorgeschlagen, an den in einem Anbindungsbereich zumindest bereichsweise eine erste wenigstens dreilagige Folie angebunden ist, wobei die erste Folie eine erste, mit einem Kunststoff ausgeführte Lage, eine zweite, einen metallischen Werkstoff aufweisende Lage und eine dritte, mit einem Kunststoff ausgeführte Lage aufweist, und wobei die zweite Lage zwischen der ersten Lage und der dritten Lage angeordnet ist. Erfindungsgemäß ist vorgesehen, dass der eigensteif ausgeführte Einsatz in dem Anbindungsbereich einen wenigstens zweilagigen Bereich aufweist, wobei eine erste, der ersten Folie zugewandte Lage des Bereichs mit einem Kunststoff ausgeführt ist und der Bereich eine zweite Lage aufweist, die auf einer der ersten Folie abgewandten Seite der ersten Lage des Bereichs angeordnet ist, wobei die zweite Lage einen metallischen Werkstoff aufweist.

Eine erfindungsgemäß ausgeführte Kartusche hat den Vorteil, dass die Folie sicher und stabil an den Einsatz angebunden ist. Die stabile Anbindung der Folie an den Bereich des Einsatzes ist dabei auf prozesssichere Weise erzielt. Dies wird dadurch erreicht, dass mittels der zweiten Lage des Bereichs während des Anbindungsverfahrens der Folie an dem Anbindungsbereich eine günstige Wärmeübertragung erzielt wird, da während eines Anbindungsverfahrens sowohl die zweite Lage der ersten Folie als auch die zweite Lage des Bereichs erhitzt werden, so dass von zwei Seiten Hitze in Richtung einer Kontaktfläche der ersten Folie mit dem Bereich des Einsatzes, d. h. in Richtung einer Anbindungsfläche, übertragen wird. Hierdurch kann auf einfache Weise erzielt werden, dass die erste Lage des Bereichs des Einsatzes und die dem Anbindungsbereich zugewandte dritte Lage der ersten Folie in gewünschtem Umfang, vorzugsweise im Wesentlichen gleichmäßig erhitzt werden. Hierdurch können vor einer Anbindung einander zugewandte Oberflächen des Einsatzes und der Folie im Wesentlichen gleichmäßig aufgeschmolzen werden und sicher verhindert werden, dass die erste Folie, insbesondere die dritte Lage der ersten Folie, überhitzt wird. Hierdurch kann auf einfache Weise eine stabile Anbindung einer ersten Folie an einen Einsatz geschaffen werden, wobei eine Belastbarkeit der Anbindung im Bereich der Belastbarkeit der ersten Folie liegt.

Die zweite Lage der ersten Folie bzw. des Bereichs kann gegebenenfalls auch mit oder aus einem anderen wärmeleitfähigen Material ausgeführt sein. Beispielsweise können hier auch Kunststoffe, wie beispielsweise PVC zum Einsatz kommen.

Unter einer Kartusche wird hier ein Aufbewahrungsbehälter, beispielsweise ein mit Folien ausgeführter Behälter oder ein formstabiler Behälter für eine Masse oder Flüssigkeit verstanden, die beispielsweise einen kreisförmigen, ovalen, rechteckigen oder dergleichen Querschnitt aufweist. Die Kartusche kann zusätzlich ein Kopfteil zur Ausbringung der Masse oder Flüssigkeit aus dem Behälter aufweisen. Weiterhin kann die Kartusche auch zwei oder mehrere Behälter aufweisen, die insbesondere an ein gemeinsames Kopfteil angebunden sein können.

Die erste Folie weist vorzugsweise insgesamt eine Dicke zwischen 0,06 mm und 0,12 mm auf, wobei eine Schichtdicke der zweiten Lage der ersten Folie vorzugsweise zwischen 0,005 mm und 0,015 mm liegt.

Bei einer vorteilhaften Ausführung einer erfindungsgemäßen Kartusche ist der eigensteife Einsatz als Spritzgussteil ausgeführt. Dies hat den Vorteil, dass der wenigstens zweilagige Bereich, der beispielsweise ebenfalls als Folie ausgeführt sein kann, beim Herstellen des Spritzgussteils integral mit dem Einsatz herstellbar ist und kein separater Prozessschritt erforderlich ist.

Der Bereich des Einsatzes weist bei einer vorteilhaften Ausführung der Erfindung eine dritte Lage in einem der ersten Lage abgewandten Bereich der zweiten Lage auf, wobei die dritte Lage des Bereichs vorzugsweise ebenso wie die erste Lage mit einem Kunststoff ausgeführt ist.

Der Bereich des Einsatzes ist vorzugsweise als zweite Folie ausgebildet, die insbesondere hinsichtlich Aufbau und Zusammensetzung im Wesentlichen vergleichbar zu der ersten Folie ausgeführt ist und beispielsweise zwei, drei, vier, fünf oder mehr Lagen aufweisen kann.

Bei einer vorteilhaften Ausführung der Erfindung ist die zweite Lage der ersten Folie und/oder die zweite Lage des Einsatzes mit Aluminium ausgebildet und besteht vorzugsweise aus Aluminium. Alternativ hierzu können auch andere metallische Werkstoffe zum Einsatz kommen.

Um eine besonders stabile Anbindung der ersten Folie an den Einsatz zu erzielen, können einander zugewandte Lagen des Bereichs und der ersten Folie vorzugsweise mit einem im Wesentlichen identischen Material ausgeführt sein.

Eine Anbindung der ersten Folie an den Einsatz ist auf einfache und stabile Weise erzielbar, wenn die erste Folie mittels einer Schweißverbindung, insbesondere einer in einem Hochfrequenz-Verfahren hergestellten Schweißverbindung, an den Einsatz angebunden ist.

Bei einer vorteilhaften Ausführung einer erfindungsgemäßen Kartusche weist die erste Folie und/oder der Bereich wenigstens vier, insbesondere fünf oder mehr Lagen bzw. Schichten auf. Hierdurch sind gewünschte Eigenschaften der jeweiligen Folie bzw. des Bereichs besonders genau einstellbar. Die jeweils äußeren Lagen stellen dabei die erste Lage und die dritte Lage dar, wobei die zweite metallische Lage eine beliebige zwischen der ersten Lage und der zweiten Lage angeordnete Lage sein kann und beispielsweise eine mittlere Lage oder eine an die erste Lage oder die dritte Lage grenzende Lage darstellen kann.

Besonders bevorzugt ist dabei ein fünflagiger bzw. fünfschichtiger Aufbau der Folie bzw. des Bereichs, wobei eine mittlere Lage vorzugsweise mit Aluminium ausgeführt ist und eine Sperrschicht darstellen kann, mittels der beispielsweise das Eindringen von Wasserdampf und/oder Sauerstoff in die Kammer der Kartusche verhindert werden kann. Hierdurch kann verhindert werden, dass die in der Kammer angeordnete Masse reagiert und hierdurch deren Haltbarkeit verringert wird bzw. sich deren Zusammensetzung in unerwünschter Weise ändert. Zudem kann die zweite Lage vorzugsweise ein Ausgasen des in der Kammer der Kartusche befindlichen Materials verhindern.

Im Vergleich zu einem dreilagigen Aufbau können beispielsweise zwischen der ersten Lage und der zweiten Lage eine vierte Lage und zwischen der zweiten Lage und der dritten Lage eine fünfte Lage vorgesehen sein, die beispielsweise jeweils als Polyethylen-Lage (PE-Lage) ausgeführt sein kann. Die erste Lage und die dritte Lage können jeweils als Polypropylen-Lage (PP-Lage) und/oder als Polyethylen-Lage (PE-Lage) ausgeführt sein.

Der Einsatz kann vorzugsweise als Ring ausgeführt sein, der beispielsweise in einem oberen und/oder unteren Endbereich der Kartusche angeordnet ist, wobei die erste Folie vorzugsweise eine Öffnung des Rings verschließt. Alternativ oder zusätzlich hierzu kann die erste Folie eine seitliche Begrenzung der Kartusche darstellen und beispielsweise einen die Kartusche seitlich begrenzenden Folienschlauch darstellen.

In einem weiteren Aspekt betrifft die Erfindung ein Verfahren zur Herstellung einer derartigen Kartusche für eine Auspressvorrichtung mittels der folgenden Schritte vorgeschlagen:
- Herstellung eines eigensteif ausgeführten Einsatzes als Spritzgussteil mit dem wenigstens zweilagige Bereich in einem Spritzgussverfahren,
- Anbindung der ersten Folie an den Anbindungsbereich des Einsatzes in einem Schweißverfahren, insbesondere in einem Hochfrequenz-Schweißverfahren.

Die für die Kartusche beschriebenen Vorteile gelten für das vorgeschlagene Verfahren zum Herstellen der Kartusche analog. Mittels des erfindungsgemäßen Verfahrens ist eine Kartusche prozesssicher herstellbar, wobei die Folie auf stabile Weise an dem Einsatz angebunden wird. Es kann dabei auf einfache Weise erzielt werden, dass die Belastbarkeit der Schweißverbindung im Wesentlichen der Belastbarkeit der Folie entspricht.

Bei einer vorteilhaften Ausführungsform eines Verfahrens nach der Erfindung werden der Einsatz zumindest im Anbindungsbereich und/oder die erste Folie vor einer Anbindung der Folie an den Anbindungsbereich des Einsatzes erwärmt. Hierdurch kann eine Stabilität der Schweißverbindung weiter verbessert werden.

Bei einer bevorzugten Ausführungsform eines Verfahrens nach der Erfindung ist vorgesehen, dass der Bereich während eines Spritzvorgangs des Einsatzes integral mit dem Einsatz hergestellt wird. Auf diese Weise ist der Einsatz und somit auch die gesamte Kartusche einfach und kostengünstig herstellbar.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: einen Längsschnitt durch eine erfindungsgemäße Kartusche in Explosionsdarstellung;
- Fig. 2: eine vereinfachte Ansicht der Kartusche gemäß Fig. 1;
- Fig. 3: eine vergrößerte Ansicht eines Ausschnitts der Kartusche gemäß Fig. 2; und
- Fig. 4: eine vereinfachte schematische Ansicht des Einsatzes mit daran angeordneter Folie.

### Ausführungsbeispiele:

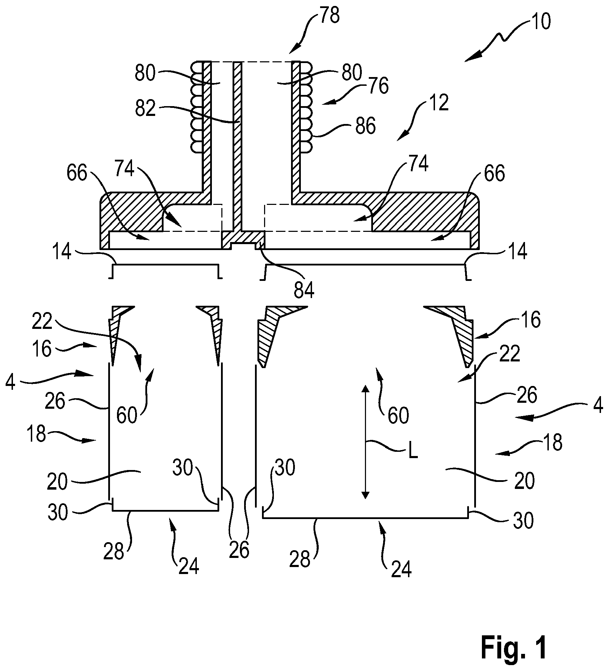

Figur 1 zeigt eine Kartusche 10 in einer Explosionsdarstellung in einem Längsschnitt.

Die Kartusche 10 umfasst im gezeigten Ausführungsbeispiel zwei jeweils mit einem Folienbeutel 18 ausgeführte Behälter 4, die jeweils im Wesentlichen baugleich ausgeführt sich allerdings hinsichtlich der Dimensionierung unterscheiden. Grundsätzlich ist eine Kartusche auch mit einem einzigen Behälter ausführbar.

Die Behälter 4 weisen neben dem Folienbeutel 18 jeweils einen Einsatz 16 und ein Abdeckung 14 auf. Die Kartusche 10 weist vorliegend zur Verbindung der beiden Behälter 4 ein Kopfteil 12 auf, an das die beiden Behälter 4 gemeinsam oder separat angebunden werden können. Eine Anbindung der Behälter 4 an das Kopfteil 12 findet über die Einsätze 16 statt.

Die Folienbeutel 18 sind nicht eigensteif ausgeführt und weisen jeweils eine zylindrische und im Wesentlichen längliche Form auf. Die Folienbeutel 18 begrenzen jeweils eine Kammer 20 und weisen eine Öffnung 22 auf, wobei die Kammer 20 des Folienbeutels 18 insbesondere dichtend verschließbar ist.

In der gezeigten Ausgestaltung ist der Folienbeutel 18 durch ein Bodenteil 24 und einen Folienschlauch 26 gebildet. Das Bodenteil 24 weist eine Grundfläche 28 und einen um die Grundfläche 28 umlaufenden Kragen 30 auf. Der Folienschlauch 26 ist außenseitig an dem Kragen 30 durch Verschweißen oder Kleben befestigt. Grundsätzlich kann der Folienschlauch 26 auch innenseitig an dem Kragen 30 durch Verschweißen oder Kleben befestigt sein.

Der Folienschlauch 26 kann beispielsweise aus einer Folie durch Verkleben oder Verschweißen von Randbereichen hergestellt sein. Es kann auch vorgesehen sein einen bereits vorgefertigten Folienschlauch bzw. einen vorgefertigten Folienbeutel zu verwenden.

Die Grundfläche 28 ist beispielsweise kreisförmig, sodass die Kammer 20 zylinderförmig ausgestaltet ist. Prinzipiell ist jedoch jede beliebige Form der Grundfläche 28 denkbar, beispielsweise rechteckig bzw. polygonal.

Der Einsatz 16 ist jeweils eigensteif ausgebildet und innenseitig durch die Öffnung 22 zumindest teilweise in die entsprechende Kammer 20 eines zugeordneten Folienbeutels 18 eingesetzt.

Die der Kammer 20 zugewandte Innenseite 38 des Einsatzes 16 umschließt einen Durchgang 60, der in Längsrichtung L in Richtung des Kopfteils 12 konisch zulaufend ist.

Grundsätzlich ist der Einsatz 16 ringförmig ausgebildet, sodass er mit dem zylinderförmigen Folienschlauch 26 gekoppelt werden kann.

Eine Innenseite des Folienschlauchs 26 ist mit einer Außenseite des Einsatz 16 verbunden, wobei eine Anbindung des Folienschlauches 26 an den Einsatz 16 sowie eine Anbindung der Abdeckung 14 an den Einsatz 16 später näher erläutert wird.

In an dem Einsatz 16 angeordneten Zustand verschließt die Abdeckung 14 den Durchgang bzw. die Öffnung 60, so dass die Abdeckung 14 die Kammer 20 in Längsrichtung L nach oben verschließt und die Kammer 20 in montiertem Zustand der Abdeckung 14 vorzugsweise vollständig abgedichtet ist.

Das Kopfteil 12 weist weiterhin einen Austrittsstutzen 76, mit einer Austrittsöffnung 78 und wenigstens einem Austrittskanal 80, auf. Die Austrittsöffnung 78 steht durch den Austrittskanal 80 mit dem Ausbreitungsraum 74 und der Aufnahme 66 in Fluidverbindung.

Der in Fig. 1 dargestellte Austrittsstutzen 76 weist zwei Austrittskanäle 80 auf, die mit der jeweiligen Aufnahme 66 in Fluidverbindung stehen und durch eine Trennwand 82 voneinander getrennt sind, die sich von einem die Aufnahmen 66 trennenden Verbindungssteg 84 bis zu der Austrittsöffnung 78 erstreckt.

Der Austrittsstutzen 76 weist ferner ein Gewinde 86 auf, durch das ein nicht ersichtlicher Aufsatz an der Austrittsöffnung 78 des Kopfteils 12 befestigt werden kann. Dieser Aufsatz kann Teil einer Auspressvorrichtung sein, in die die Kartusche 10 eingesetzt bzw. eingelegt werden kann.

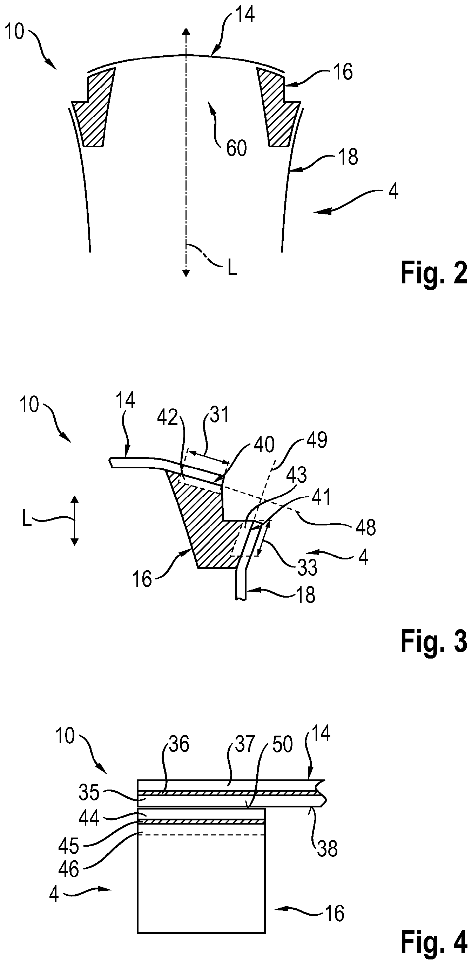

Der in Fig. 2 bis Fig. 4 näher ersichtliche Einsatz 16 ist hier einstückig ausgeführt und weist einen ersten Anbindungsbereich 31 zur Anbindung der Abdeckung 14 und einen zweiten Anbindungsbereich 33 zur Anbindung des Folienschlauchs 26 auf.

Eine Anbindung der Abdeckung 14 an dem ersten Anbindungsbereich 31 des Einsatz 16 kann dabei insbesondere vergleichbar zu der Anbindung des Folienbeutels 18 an dem zweiten Anbindungsbereich 33 des Einsatzes 16 erfolgen, so dass die Anbindung der Abdeckung 14 an dem ersten Anbindungsbereich 31 im Folgenden stellvertretend für die Anbindung des Folienbeutels 18 an dem Einsatz 16 beschrieben wird.

Zudem kann die Abdeckung 14 hinsichtlich Aufbau und Zusammensetzung im Wesentlichen vergleichbar zu dem Folienbeutel 18 ausgeführt sein, wobei die Abdeckung 14 und der Folienbeutel 18 jeweils als erste wenigstens dreilagige bzw. dreischichtige Folie ausgeführt sind.

Die erste Folie 14 weist eine erste, mit einem Kunststoff ausgeführte Lage 35, eine zweite, einen metallischen Werkstoff aufweisende Lage 36 und eine dritte, mit einem Kunststoff ausgeführte Lage 37 auf. Die zweite Lage 36 besteht insbesondere aus Aluminium und ist zwischen der ersten Lage 35 und der dritten Lage 37 angeordnet. Die erste Lage 35 bildet dabei eine in montiertem Zustand dem Einsatz 16 zugewandte Oberfläche 38 der ersten Folie 14. Die erste Lage 35 und die zweite Lage 37 sind vorzugsweise mit demselben Kunststoff ausgeführt, der insbesondere dem Kunststoff entspricht oder zumindest vergleichbar zu dem Kunststoff ist, mit dem der Einsatz 16 ausgeführt ist bzw. aus dem der Einsatz 16 besteht.

Der Einsatz 16 ist im ersten Anbindungsbereich 31 und im zweiten Anbindungsbereich 33 im Wesentlichen vergleichbar aufgebaut und weist einen jeweils integral mit dem Einsatz 16 ausgeführten Bereich 40 bzw. 41 auf, der zur Anbindung an die erste Folie 14 bzw. die erste Folie 18 ausgeführt ist.

Der Bereich 40 bzw. 41 des Einsatzes 16 weist hier jeweils eine zweite Folie 42 bzw. 43 auf, die im Wesentlichen vergleichbar zu der ersten Folie 14 bzw. 18 ausgeführt ist. Somit weist auch die zweite Folie 42 bzw. 43 eine erste Lage 44, eine zweite Lage 45 und eine dritte Lage 46 auf, wobei die erste Lage 44 und die zweite Lage 46 mit einem Kunststoff ausgeführt sind bzw. aus einem Kunststoff bestehen und die zweite Lage 45 einen metallischen Werkstoff, insbesondere Aluminium, aufweist und zwischen der ersten Lage 44 und der zweiten Lage 46 angeordnet ist. Die erste Lage 44 der zweiten Folie 42 bzw. 43 stellt in dem jeweiligen Anbindungsbereich 31 bzw. 33 vor einer Anbindung der jeweiligen ersten Folie 14 bzw. 18 an den Einsatz 16 eine Oberfläche 50 des Einsatzes 16 dar.

Die erste Folie und die zweite Folie können bei einer alternativen Ausführung der Erfindung jeweils auch mehrlagig, beispielsweise vierlagig, fünflagig oder mit noch mehr Lagen ausgeführt sein.

Die zweite Folie 42 bzw. 43 ist in dem ersten Anbindungsbereich 31 bzw. dem zweiten Anbindungsbereich 33 integral mit dem hier als Spritzgussteil ausgeführten Einsatz 16 verbunden, wobei die zweiten Folien 42 bzw. 43 vorzugsweise während der Herstellung des Einsatzes 16 in dem Spritzgussverfahren mit dem Einsatz 16 verbunden werden. Die zweiten Folien 42 bzw. 43 sind vorzugsweise an den Einsatz 16 angespritzt.

Die erste Folie 14 bzw. 18 weist vorzugsweise ebenso wie die zweite Folie 42 bzw. 43 insgesamt eine Dicke zwischen 0,06 mm und 0,12 mm auf, wobei eine Schichtdicke der zweiten Lage 36 der ersten Folie 14 bzw. 18 bzw. der zweiten Lage 45 der zweiten Folie 42 bzw. 43 vorzugsweise zwischen 0,005 mm und 0,015 mm liegt.

Die erste Folie 14 bzw. 18 wird vorzugsweise in einem Hochfrequenz-Schweißverfahren in dem ersten Anbindungsbereich 31 bzw. dem zweiten Anbindungsbereich 33 an den Einsatz 16 angebunden, wobei in Fig. 3 stark schematisiert eine erste Schweißebene 48 zur Anbindung der ersten Folie 14 an den Einsatz 16 und eine zweite Schweißebene 49 zur Anbindung der ersten Folie 18 an den Einsatz 16 gezeigt ist.

Während des Hochfrequenz-Schweißverfahrens wird durch ein Hochfrequenzfeld die zweite Lage 36 der ersten Folie 14 bzw. 18 und die zweite Lage 45 der zweiten Folie 42 bzw. 43 angeregt und erwärmt. Diese Wärme breitet sich durch die erste Lage 35 der ersten Folie 14 bzw. 18 und die erste Lage 44 der zweiten Folie 42 bzw. 43 aus. Hierdurch wird eine insbesondere gleichmäßige Aufschmelzung der ersten Lage 35 der ersten Folie 14 bzw. 18 und der ersten Lage 44 der zweiten Folie 42 bzw. 43 erzielt und eine Überhitzung bzw. Beschädigung der jeweiligen Folie 14, 18, 42, 43 wird sicher verhindert.

Bei der vorgeschlagenen Lösung wird von beiden Seiten, d. h. von Seiten der ersten Folie 14 bzw. 18 sowie von Seiten der zweiten Folie 42 bzw. 43 Wärme in Richtung der jeweiligen Schweißebene 48 bzw. 49 übertragen. Ein Überhitzen der einander zugewandten Kunststofflagen 36 bzw. 44 kann hierbei sicher verhindert werden, eine belastbare Anbindung der ersten Folie 14 bzw. 18 ist auf prozesssichere Weise erzielt und eine Belastbarkeit der jeweiligen Schweißverbindung liegt vorzugsweise im Bereich der Belastbarkeit der ersten Folie 14 bzw. 18.

Gemäß Fig. 1 weist das Kopfteil 12 zwei Aufnahmen 66 auf, die in montiertem Zustand mit den Einsätzen 16 und der Abdeckung 14 zusammenwirken. Die Aufnahme 66 umfasst einen Ausdehnungsbereich, der als Vertiefung in der Aufnahme 66 ausgeführt ist und, wie in Fig. 1 ersichtlich ist, einen Ausbreitungsraum 74 bildet.

Verschiedenen Ausgestaltungen einzelner Bauteile sind beispielhaft zu verstehen, so dass verschiedenen Ausgestaltungen und verschiedenen Merkmale der Ausführungsformen beliebig miteinander kombinierbar sind. Die als Unterschiede aufgezählten Merkmale und Ausgestaltungen sind unabhängig und können in verschiedener Weise kombiniert werden.

In den dargestellten Ausführungsformen umfasst die Kartusche 10 ein oder zwei Kammern 20 und eine entsprechende Anzahl an Abdeckungen 14, Einsätzen 16, Folienbeuteln 18, Aufnahmen 66 und Austrittskanälen 80. Im Allgemeinen ist eine beliebige Anzahl der genannten Bauteile möglich.

## Patentansprüche

1. Kartusche (10) für eine Auspressvorrichtung, mit einem eigensteif ausgeführten Einsatz (16), an den in einem Anbindungsbereich (31, 33) zumindest bereichsweise eine erste wenigstens dreilagige Folie (14, 18) angebunden ist, wobei die erste Folie (14, 18) eine erste, mit einem Kunststoff ausgeführte Lage (35), eine zweite, einen metallischen Werkstoff aufweisende Lage (36) und eine dritte, mit einem Kunststoff ausgeführte Lage (37) aufweist, und wobei die zweite Lage (36) zwischen der ersten Lage (35) und der dritten Lage (37) angeordnet ist, **dadurch gekennzeichnet, dass** der eigensteif ausgeführte Einsatz (16) in dem Anbindungsbereich (31, 33) einen wenigstens zweilagigen Bereich (40, 41) aufweist, wobei eine erste, der ersten Folie (14, 18) zugewandte Lage (44) des Bereichs (40, 41) mit einem Kunststoff ausgeführt ist und der Bereich (40, 41) eine zweite Lage (45) aufweist, die auf einer der ersten Folie (14, 18) abgewandten Seite der ersten Lage (44) des Bereichs (40, 41) angeordnet ist, wobei die zweite Lage (45) einen metallischen Werkstoff aufweist.

2. Kartusche nach Anspruch 1, **dadurch gekennzeichnet, dass** der eigensteife Einsatz (16) als Spritzgussteil ausgeführt ist.

3. Kartusche nach einem der Ansprüche 1 oder 2, **dadurch gekennzeichnet, dass** der Bereich (40, 41) eine dritte Lage (46) in einem der ersten Lage (44) abgewandten Bereich der zweiten Lage (45) aufweist.

4. Kartusche nach einem der vorhergehenden Ansprüche, **dadurch gekennzeichnet, dass** die zweite Lage (36) der ersten Folie (14, 18) und/oder die zweite Lage (45) des Bereichs (40, 41) mit Aluminium ausgebildet ist.

5. Kartusche nach einem der vorhergehenden Ansprüche, **dadurch gekennzeichnet, dass** der Bereich (40, 41) des Einsatzes (16) als zweite Folie (42, 43) ausgebildet ist.

6. Kartusche nach einem der vorhergehenden Ansprüche, **dadurch gekennzeichnet, dass** einander zugewandte Lagen (35, 44) des Bereichs (40, 41) und der ersten Folie (14, 18) vorzugsweise mit einem im Wesentlichen identischen Material ausgeführt sind.

7. Kartusche nach einem der vorhergehenden Ansprüche, **dadurch gekennzeichnet, dass** die erste Folie (14, 18) mittels einer Schweißverbindung an den Einsatz (16) angebunden ist.

8. Kartusche nach einem der vorhergehenden Ansprüche, **dadurch gekennzeichnet, dass** die erste Folie (14,18) und/oder der Bereich (40, 41) wenigstens vier, insbesondere fünf oder mehr Lagen aufweist.

9. Kartusche nach einem der vorhergehenden Ansprüche, **dadurch gekennzeichnet, dass** der Einsatz (16) als Ring ausgeführt ist.

10. Kartusche nach einem der vorhergehenden Ansprüche, **dadurch gekennzeichnet, dass** die erste Folie (14) eine Öffnung (22) des Einsatzes (16) verschließt.

11. Kartusche nach einem der vorhergehenden Ansprüche, **dadurch gekennzeichnet, dass** die erste Folie (18) eine seitliche Begrenzung eines Behälters (4) der Kartusche (10) darstellt.

12. Verfahren zur Herstellung einer Kartusche (10) für eine Auspressvorrichtung nach einem der Ansprüche 1 bis 11, mittels der folgenden Schritte:
- Herstellung eines eigensteif ausgeführten Einsatzes (16) als Spritzgussteil mit dem wenigstens zweilagigen Bereich (40, 41) in einem Spritzgussverfahren,
- Anbindung der ersten Folie (14, 18) an den Anbindungsbereich (31, 33) des Einsatzes (16) in einem Schweißverfahren.

13. Verfahren nach Anspruch 12, **dadurch gekennzeichnet, dass** der Einsatz (16) zumindest in dem Anbindungsbereich (31, 33) und/oder die erste Folie (14, 18) vor einer Anbindung der ersten Folie (14, 18) an den Einsatz (16) erwärmt wird.

14. Verfahren nach einem der Ansprüche 12 oder 13, **dadurch gekennzeichnet, dass** der Bereich (40, 41) während eines Spritzvorgangs des Einsatzes (16) integral mit dem Einsatz (16) hergestellt wird.
